## Europäisches Patentamt

## European Patent Office

## Office européen des brevets

(19)

(11) Veröffentlichungsnummer: **0 179 263**

**A1**

(12) # EUROPÄISCHE PATENTANMELDUNG

(21) Anmeldenummer: 85111648.3

(22) Anmeldetag: 14.09.85

(51) Int. Cl.⁴: **C 08 F 6/12**

(30) Priorität: 24.10.84 CH 5081/84

(43) Veröffentlichungstag der Anmeldung:
30.04.86 Patentblatt 86/18

(84) Benannte Vertragsstaaten:
DE FR GB IT

(71) Anmelder: GEBRÜDER SULZER AKTIENGESELLSCHAFT
Zürcherstrasse 9
CH-8401 Winterthur(CH)

(72) Erfinder: Altorfer,Alfred
Riedhalden 13
CH-8427 Freienstein(CH)

(74) Vertreter: Dipl.-Ing. H. Marsch Dipl.-Ing. K. Sparing
Dipl.-Phys.Dr. W.H. Röhl Patentanwälte
Rethelstrasse 123
D-4000 Düsseldorf(DE)

(54) Verfahren zur Abtrennung von festen, aliphatischen, chlorierten Polymeren von einem Chlorierungs-Lösungsmittel.

(57) Das Verfahren zur Abtrennung von festen, aliphatischen, chlorierten Polymeren von einem Chlorierungs-Lösungsmittel besteht darin, dass man eine Behandlung mit Wasserdampf, Heisswasser oder Heissgas in Gegenwart eines Hilfslösungsmittels durchführt, z.B. Toluol. Hierdurch wird erreicht, dass die chlorierten Polymere für die Herstellung von Endprodukten, wie z.B. Anstriche, Druckfarben oder Klebemittel gut geeignet sind, da nur geringe Mengen an Hilfslösungsmittel in den chlorierten Polymeren zurückbleiben, wobei diese Reste im Endprodukt verdunsten und der Benutzer frei in der Auswahl von Zusätzen, beispielsweise Weichmacher oder dergleichen ist.

EP 0 179 263 A1

P.5911

**Gebrüder Sulzer Aktiengesellschaft, Winterthur, Schweiz**

**Verfahren zur Abtrennung von festen, aliphatischen, chlorierten Polymeren von einem Chlorierungs-Lösungsmittel**

Die Erfindung betrifft ein Verfahren zur Abtrennung von festen, aliphatischen, chlorierten Polymeren von einem Chlorierungs-Lösungsmittel.

Es sind Verfahren bekannt, nach denen aliphatische Polymere, wie z.B. Naturkautschuk, Polyisopren, Polybutadien, Polyethylen, Polypropylen und Copolymerisate chloriert werden, indem man die Polymere in einem chlorbeständigen Lösungsmittel, wie z.B. Tetrachlormethan, Chloroform, Trichlorethylen oder Tretrachlorethan auflöst und in geeigneter Weise mit Chlor umsetzt.

Danach wird das chlorierte Polymere isoliert, indem man die Lösung mit heissem Wasser, Dampf oder Heissgas behandelt. Der grösste Teil des verwendeten Lösungsmittels destilliert hierbei ab. Das chlorierte Polymere fällt in fester Form aus und kann abfiltriert und getrocknet werden. Trotz sorgfältiger Prozessführung lässt sich Chlorierungslösungmittel nur bis zu einem Restgehalt von 4 bis 10 Gewichtsprozent aus den chlorierten Polymeren entfernen.

Bei Anwendung dieser chlorierten Polymere, z.B. für Anstriche, Druckfarben oder Klebestoffe werden diese zum Teil sehr toxischen Chlorierungs-Lösungsmittel freigesetzt und können verdunsten.

Aus gesundheitlichen Gründen wird darum eine wesentliche
Reduktion des Gehaltes an Chlorierungs-Lösungsmittel im
chlorierten Polymer gefordert.

Bei bekannten Verfahren, soll der Gehalt an Chlorierungs-
Lösungsmittel im chlorierten Polymer reduziert werden
durch Nachbehandlung des wasserfeuchten Filterkuchens oder
des getrockneten Produkts mit verschiedenen Lösungsmitteln.
So wird die Behandlung mit niedrigen aliphatischen Alkoholen (vgl. EP 31 960) oder mit Methylenchloriddämpfen
(vgl. DE-OS 26 49 754) vorgeschlagen.

Diese Verfahren sind apparativ sehr aufwendig, arbeits-
und energie-intensiv und daher unwirtschaftlich.

Es ist weiterhin bekannt, dass durch verschiedene Zusätze
zur Lösung des chlorierten Polymers im Chlorierungs-Lösungsmittel der Restgehalt an Lösungsmittel nach der Behandlung mit Heisswasser oder Dampf reduziert werden kann.

So wird der Zusatz von 2 bis 14 Gewichtsprozent von Weichmachern und/oder Lackharzen, bezogen auf das chlorierte
Polymer, empfohlen (vgl. DE-OS 23 59 461) oder der Zusatz
anderer chlorierter Polymeren mit tieferer Uebergangstemperatur (vgl. CH-PS 612 986).

Ein wesentlicher Nachteil dieser Verfahren besteht darin,
dass die Zusätze bei der Isolierung des chlorierten Polymers mindestens zum grössten Teil in diesem verbleiben.
Je nach Verwendungszweck der chlorierten Polymere können

- 3 -

diese Zusätze die Qualität der Endprodukte, wie z.B. Anstriche, Druckfarben oder Klebstoffe negativ beeinflussen. Mindestens ist aber ein Verarbeiter nicht mehr frei in der Rezeptur, z.B. in der Auswahl der Weichmacher und/ oder der zuzusetzenden Lackharze.

Der Erfindung liegt die Aufgabe zugrunde, chlorierte Polymere vom Chlorierungs-Lösungsmittel mindestens weitgehend zu befreien mit einem möglichst geringen wirtschaftlichen Aufwand unter Vermeidung von im Produkt verbleibenden störenden Zusätzen.

Die Erfindung besteht darin, dass man eine Behandlung mit Wasserdampf, Heisswasser oder in Gegenwart eines Hilfslösungsmittels durchführt, das mit der Lösung des chlorierten Polymers im Chlorierungs-Lösungsmittel verträglich ist und eine höhere Siedetemperatur als das Chlorierungs-Lösungsmittel, aber höchstens 180° C aufweist.

Bevorzugte Hilfslösungsmittel sind z.B. Ester, Ketone oder solche mit Aromaten-Struktur, wie z.B. Toluol oder Xylol mit Siedetemperaturen bei Atmosphärendruck von höchstens 180° C, aber höher als die Siedetemperaturen der gebräuchlichen Chlorierungs-Lösungsmittel, wie beispielsweise Tetrachlormethan.

Das erfindungsgemässe Verfahren bewirkt, dass bei der Behandlung mit Heisswasser oder Dampf das Chlorierungs-Lösungsmittel zusammen mit dem Hilfslösungsmittel verdampft und das chlorierte Polymer einen wesentlich geringeren Restgehalt an Chlorierungs-Lösungsmittel aufweist als bei Abtrennungsverfahren ohne Zusätze. Es bleiben eben-

- 4 -

falls nur geringe Mengen als Hilfslösungsmittel im chlorierten Polymer zurück.

Diese niederen Gehalte an Hilfslösungsmittel stören bei der Anwendung von chlorierten Polymeren in der Regel nicht, da sie mit dem Polymeren und mit dem bei üblichen Anstrich- oder Farbsystemen angewendeten Lösungsmitteln verträglich sind. Wird z.B. ein Anstrichsystem angewendet, so verdunsten diese Reste an Hilfslösungsmittel mit Anstrichlösungsmittel praktisch vollständig.

Somit ist der Anwender frei in der Auswahl von Weichmacher-, Stabilisier-, Lackharz- oder anderen Zusätzen.

Obwohl die Erfindung alle Hilfslösungsmittel umfasst, wie sie im Kennzeichen des Anspruchs 1 definiert sind, sind Toluol und Xylol besonders vorteilhaft als Hilfslösungsmittel. Bei Anwendung dieser Hilfslösungsmittel bringt man keine neuen Komponenten in ein Anwendersystem. Ausserdem lassen sich diese Lösungsmittel in sehr einfacher Art durch Dekantieren und Rektifizieren von Wasser und dem Chlorierungs-Lösungsmittel abtrennen.

**Patentansprüche**

1. Verfahren zur Abtrennung von festen, aliphatischen, chlorierten Polymeren von einem Chlorierungs-Lösungsmittel, dadurch g e k e n n z e i c h n e t , dass man eine Behandlung mit Wasserdampf, Heisswasser oder in Gegenwart _Heissgas_ eines Hilfslösungsmittels durchführt, das mit der Lösung des chlorierten Polymers im Chlorierungs-Lösungsmittel verträglich ist und eine höhere Siedetemperatur als das Chlorierungs-Lösungsmittel, aber höchstens 180° C aufweist.

2. Verfahren nach Anspruch 1, dadurch gekennzeichnet, dass die Menge des Hilfslösungsmittels mindestens 100 Gewichtsprozent, bezogen auf die chlorierten Polymere, beträgt.

3. Verfahren nach Anspruch 1, dadurch gekennzeichnet, dass das Hilfslösungsmittel eine Siedetemperatur von 100 bis 160° C aufweist.

4. Verfahren nach Anspruch 1, dadurch gekennzeichnet, dass das Hilfslösungsmittel Toluol ist.

5. Verfahren nach Anspruch 1, dadurch gekennzeichnet, dass das Hilfslösungsmittel Xylol ist.

6. Verfahren nach Anspruch 1, dadurch gekennzeichnet, dass das Chlorierungs-Lösungsmittel Tetrachlormethan ist.

![Europäisches Patentamt] **Europäisches Patentamt**

**EUROPÄISCHER RECHERCHENBERICHT**

**0179263**
Nummer der Anmeldung

EP 85 11 1648

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| E | EP-A-0 144 045 (BAYER) <br> * Insgesamt * | 1-6 | C 08 F  6/12 |
| | --- | | |
| Y | EP-A-0 026 892 (HOECHST) <br> * Anspruch; Seite 3, Zeile 31 - Seite 4, Zeile 20 * | 1-6 | |
| | --- | | |
| Y | FR-A-1 424 790 (SOCIETA ELETTRICA ED ELETTROCHIMICA DEL CAFFARO) <br> * Zusammenfassung; Beispiele 1-3; Seite 1, Absätze 5,6 * | 1-6 | |
| | --- | | |
| A | EP-A-0 031 960 (BAYER) <br><br> * Ansprüche * | | |
| | ----- | | |

| | RECHERCHIERTE SACHGEBIETE (Int. Cl.4) |
|---|---|
| | C 08 F <br> C 08 C <br> C 08 J |

Der vorliegende Recherchenbericht wurde für alle Patentansprüche erstellt.

| Recherchenort | Abschlußdatum der Recherche | Prüfer |
|---|---|---|
| DEN HAAG | 28-11-1985 | HALLEMEESCH A.D. |